# EUROPEAN PATENT APPLICATION

(11) **EP 0 689 790 A1**
(43) Date of publication of application: **03.01.1996**
(21) Application number: 94110284.0
(22) Date of filing: 01.07.1994
(51) Int. Cl.: A47K 11/02

(54) **Portable toilet**

(71) Applicant: Liao, Hsueh-Meng, Taipei Hsien (TW)
(72) Inventor: Liao, Hsueh-Meng, Taipei Hsien (TW)
(74) Representative: Haft, von Puttkamer, Berngruber, Czybulka

(57) **Abstract**

A portable toilet (1) including a bowl-like base (2) defining an open chamber (211) on the inside and having a plurality of hooks (212) inside the open chamber (211) at the bottom around the border, a toilet seat (3) fitted over the bowl-like base (2) at the top and having a center opening (31) vertically matched with the open chamber (211) on the bowl-like base (2) and a storage chamber (41) at one side covered with a lid (43), and disposal bags (6) received in the storage chamber (41) for putting in the open chamber (211) of the bowl-like base (2) to collect the excreta of the user.

## Description

### BACKGROUND OF THE INVENTION

The present invention relates to a portable toilet which comprises a bowl-like base, a toilet seat fitted over the bowl-like base at the top and having a storage chamber at one side covered with a lid for keeping disposal bags and sanitary items, and when in use, put the disposal bag in the bowel-like base and suspend from the toilet seat to collect the excreta of of the user.

It is an embarrassment when one wishes to go to the restroom during an outdoor activity but finds no such place available. If one cannot suppress one's desire, one may be forced to find a secluded place and then to solve the problem right on the spot. In order to eliminate this problem, there is disclosed a mobile toilet for use at any place whenever one wishes to pass out waste matter from the body. This structure of mobile toilet comprises a hollow base, a toilet seat mounted on the base at the top, a toilet cover pivotally connected to the toilet seat, and a container received inside the hollow base for keeping toilet paper and poly bags. The hollow base has two screw holes at the top near the back side thereof. The toilet seat has two through holes respectively connected to the screw holes on the hollow base by screws. When in use, the container must be taken out of the hollow base, then the toilet seat is detached from the hollow base, then pick up a poly bag from the container and suspend the poly bag from the hollow base by turning the top opening of the poly bag inside out and covering it over the hollow base, and then the toilet seat is fixed to the hollow base again to hold down the poly bag. After each use, the toilet seat must be separated from the hollow base again so that the used poly bag can be taken away from the hollow base. Furthermore, the poly bag will wrinkle or become tangled when it is suspended inside the hollow base because there is no supporting or retainer means inside the hollow base to stretch the poly bag. It is troublesome and inconvenient.

### SUMMARY OF THE INVENTION

The present invention has been accomplished to provide a portable toilet which eliminates the aforesaid drawbacks. According to one aspect of the present invention, the portable toilet comprises a bowl-like base with partition circled around defining an open chamber on the inside and having a plurality of hooks inside the open chamber at the bottom aroung the border, a toilet seat fitted over the bowel-like base at the top and having a center opening vertically matched with the open chamber on the bowel-like base and a storage chamber at one side, and disposal bage received in the storage chamber for putting in the open chamber of the bowl-like base to collect the excreta of the user.

According to another aspect of the present invention, the storage chamber of the toilet seat is covered with a lid, wherein the lid has one side pivotally connected to one side of the storage chamber at the top, and an opposite side made with a plurality of retainers releasably fastened to the storage chamber.

### BRIEF DESCRIPTION OF THE DRAWINGS

Fig. 1 is an exploded view of a portable toilet according to the present invention;
Fig. 2 is an elevational view of the portable toilet shown in Figure 1;
Fig. 3 is a sectional view of the portable toilet thereof; and
Fig. 4 shows an alternate form of the disposal bag according to the present invention.

### DETAILED DESCRIPTION OF THE PREFERRED EMBODIMENT

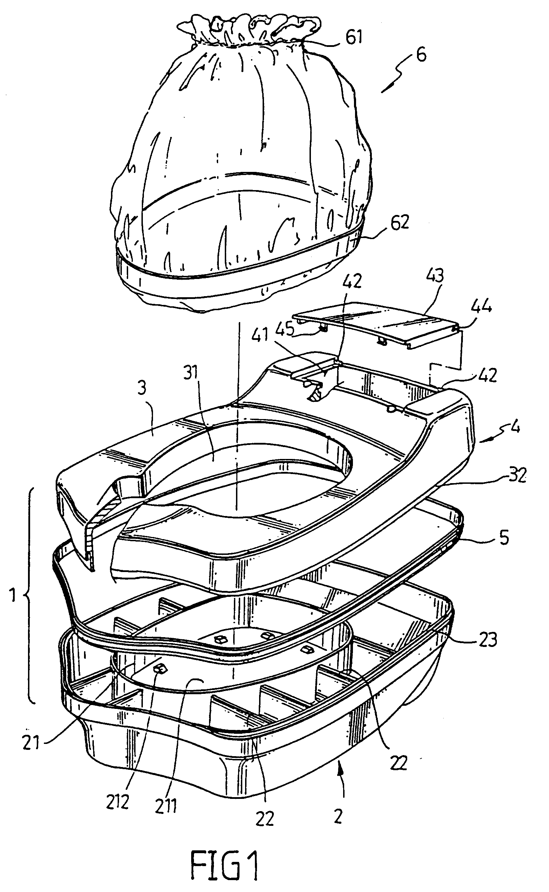

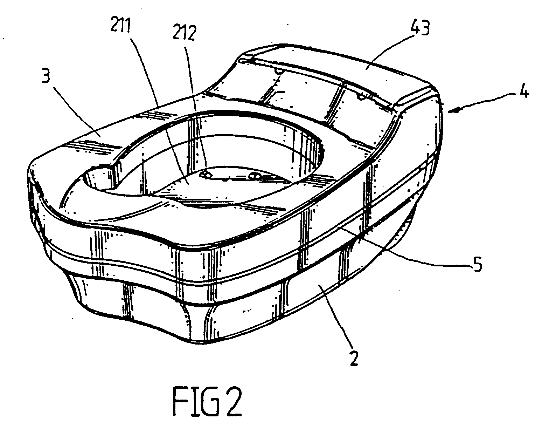

Referring to Figures 1 and 2, a portable toilet 1 in accordance with the present invention is generally comprised of a bowl-like base 2 and a toilet seat 3.

Referring to Figure 1 again, the bowl-like base 2 comprises a partition 21 on the inside connected to the peripheral wall of the bowl-like base 2 by ribs 22 and defining on the inside an open chamber 211, a groove 23 around the border of the top opening thereof, and a plurality of hooks 212 disposed inside the open chamber 211 at the bottom around the border. The toilet seat 3 fits over the bowl-like base 2 at the top, comprising a center opening 31 vertically matched with the open chamber 211 on the bowl-like base 2, a bottom flange 32 engaged into the groove 23 on the bowl-like base 2, a storage 4 at one side defining a top-open storage chamber 41 for keeping disposal bage 6 and and sanitary items, a lid 43 pivotally covered on the storage chamber 41 at the top. The storage chamber 41 comprises two opposing pins 42 longitudinally aligned at one side. The lid 43 comprises two pin holes 44 longitudinally aligned at one side and respectively pivotally connected to the opposing pins 42, and a plurality of hooks 45 spaced at an opposite side and releasably hooked on the storage chamber 41 on the inside. When the bottom flange 32 of the toilet seat 3 fits into the groove 23 on the bowl-like base 3, a packing loop 5 may be fastened around the connecting area between the bowl-like base 3 and the toilet seat 2. A disposal bag 6 according to the present invention has a tie band 61 around the top opening thereof, a loop 62 around the bottom thereof for fastening to the hooks 212. The loop 62 is made of flexible material or paper so that the disposal bag 6 can be folded up with the and stored in the storage chamber 41.

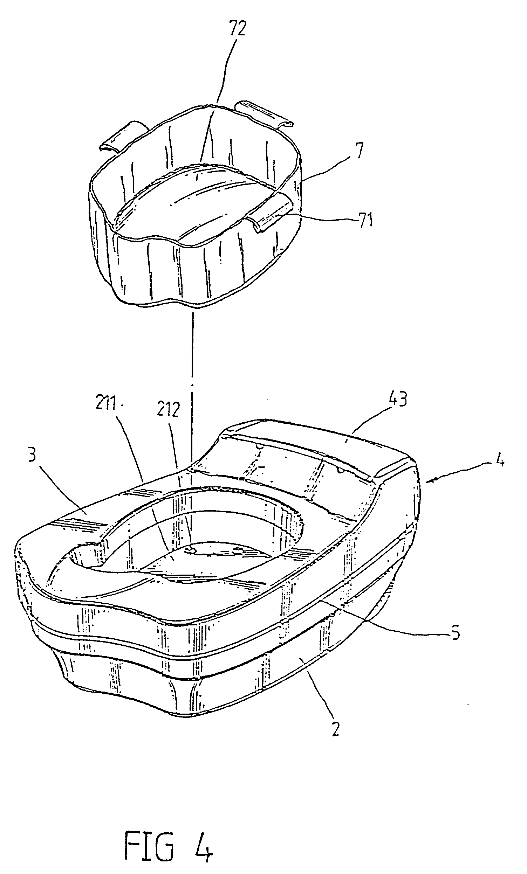

Referring to Figure 4, therein illustrated is an alternate form of the disposal bag 7. According to this alternate form, the disposal bag 7 is made of water-proof material having back-glued strips 71 around the top opening, and an absorbent pad 72 fastened to the inside wall. The absorbent pad 72 has high absorbing power for absorbing liquid.

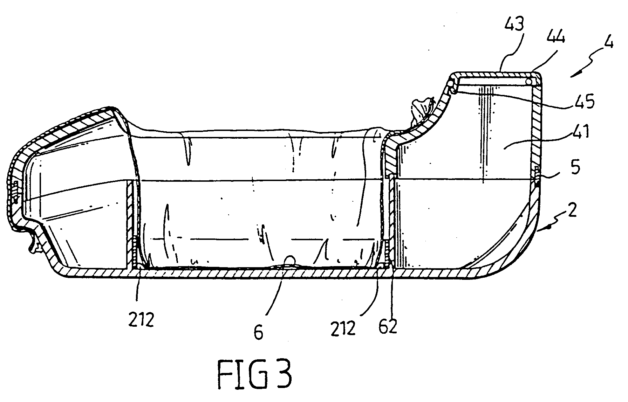

Referring to Figures 2 and 3, when one wishes to use the portable toilet, a disposal bag 6 is taken out from the storage chamber 41 and then put in the center opening 31 of the toilet seat 3 and the open chamber 211 inside the bowl-like base 2 permitting the loop 62 to be hooked by the hooks 212, and then the top opening of the disposal bag 6 is turned inside out and then fastened around the periphery of the toilet 1 by the tie band 61. Because the loop 62 is hooked by the hooks 212, the disposal bag 6 is stretched and does not wrinkle when installed. After the use, the disposal bag 6 is sealed by the tie band 61.

When a disposal bag 7 of the alternate form of Figure 4 is used, it can be suspended in the open chamber 211 inside the bowl-like base 2 by adhering the back-glued strips 71 to the toilet seat 3 around the center opening 31.

While only one embodiment of the present invention has been shown and described, it will be understood that various modifications and changes could be made without departing from the spirit and scope of the invention. For example, an open chair may be provided to hold the toilet on the inside for easy carrying.

## Claims

1. A portable toilet comprising:
a bowl-like base having a peripheral wall, a partition on the inside, a plurality of ribs connected between said peripheral wall and said partition, said partition defining an open chamber, said peripheral wall comprising a coupling portion at the top; and
a toilet seat having a center opening vertically matched with the open chamber within said partition of said bowl-like base, a coupling portion at the bottom coupled to the coupling portion of said bowl-like base.

2. The portable toilet of claim 1 which further comprising a packing loop fastened around the connecting area between said bowl-like base and said toilet seat bowl-like base.

3. The portable toilet of claim 1 wherein said bowl-like base comprises a plurality of hooks disposed inside the open chamber within said partition at the bottom around the border.

4. The portable toilet of claim 1 wherein said toilet seat comprises a storage at one said defining a top-open storage chamber for keeping things, and a lid covered on said storage chamber.

5. The portable toilet of claim 1 wherein said lid has one side pivotally connected to one side of said storage chamber at the top, and an opposite side made with a plurality of retainers releasably fastened to the storage chamber.

6. The portable toilet of claim 1 further comprising a disposal bag for putting in the open chamber of said bowl-like base for collecting waste matter passed out of the user's body.

7. The portable toilet of claim 6 wherein said disposal bag is made from water-proof material having a plurality of back-glued strips around the periphery and an absorbent pad covered on the inside wall.

8. The portable toilet of claim 6 wherein said disposal bag comprises a loop around a closed bottom end thereof for fastening to the hooks on the open chamber within said partition of said bowl-like base, and a tie band around a top opening thereof for sealing up the top opening of said disposal bag after its use.
